# EUROPEAN PATENT SPECIFICATION

(11) **EP 2 117 875 B1**
(45) Date of publication and mention of the grant of the patent: **08.12.2010**
(21) Application number: 07736687.0
(22) Date of filing: 13.03.2007
(51) Int. Cl.: B60P 3/077

(54) **ADJUSTABLE FASTENING SYSTEM FOR VEHICLE -LOADING BOARDS**
EINSTELLBARES BEFESTIGUNGSSYSTEM FÜR FAHRZEUGLADEBORDWÄNDE
SYSTÈME DE FIXATION RÉGLABLE POUR PLATES-FORMES DE CHARGEMENT DE VÉHICULES

(43) Date of publication of application: 18.11.2009
(73) Proprietor: ROLFO S.p.A., 12042 Bra (Cuneo) (IT)
(72) Inventor: GHIRARDO, Giovanni, I-12042 BRA (CN) (IT); ARNULFO, Elio, I-12042 BRA (CN) (IT)
(74) Representative: Garavelli, Paolo
(86) International application number: PCT/IT2007/000182
(87) International publication number: WO 2008/111099

(56) References cited:
- EP-A- 0 344 661
- FR-A- 2 725 946
- US-A- 2 623 759
- US-A- 4 659 266

## Description

The present invention refers to an adjustable fastening system for vehicle-loading boards according to the preamble of claim 1, used in particular on vehicles (such as trucks) for transporting other vehicles.

When it is necessary to load or unload vehicles to/from a vehicle for transporting them, usually the boards with which such transporting vehicles are equipped, are inclined and taken near the ground or the surface on which there are the vehicles to be loaded.

For loading/unloading from such surface to the loading plane, usually movable boards are used, that are fastened on one side to the loading plane and on the other side abut onto the surface on which there are the vehicles to be loaded/unloaded.

When the vehicle is loaded on the loading surface, it is necessary to block its wheels with suitable stoppers for its transport. These stoppers require a certain free space from the loaded vehicle wheel at the end of the loading surface in order to be able to be inserted. In this way, a certain length of the loading surface remains unused.

The loading surface are not continuous, but composed of parts that are adjusted in order to create such a surface that the vehicle to be loaded/unloaded can pass from one to the other without having to overcome high differences in height or surface interruptions.

EP-A-0 344 661 discloses a fastening system according to the preamble of claim 1.

Object of the present invention is solving the above prior art problems by providing a system that, with a reduced number of parts, allows obtaining the above described functionality.

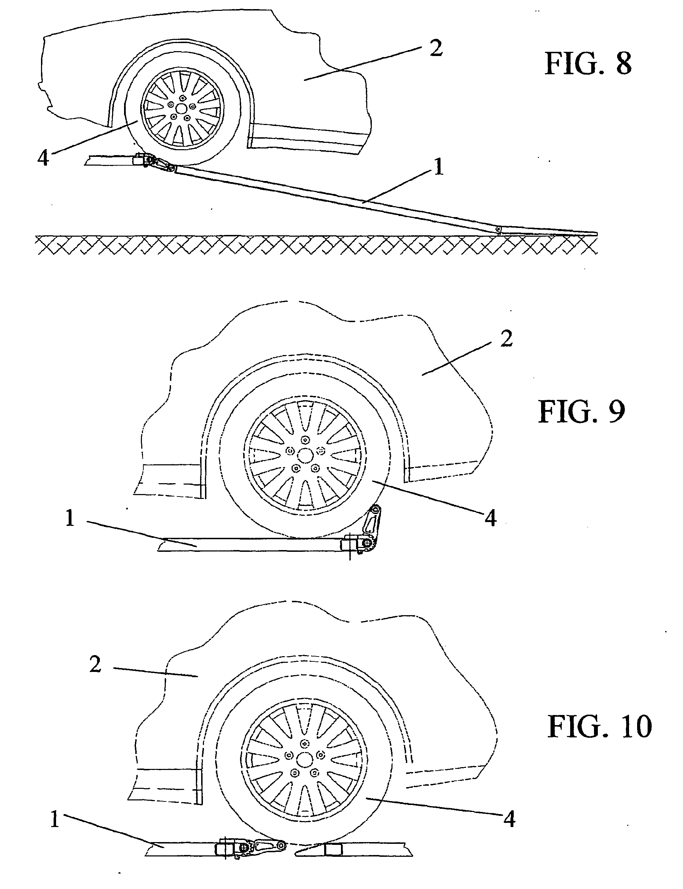

Such applications are shown, as a purely non-limiting example, in Figures 8 to 10.

A further object of the present invention is providing a system of the above mentioned type that is as much as possible able to be disassembled and modular, allowing high manufacturing, and above all maintenance, costs savings, being adapted to have replaced, in case of need, only one of the system parts and not the system as a whole.

The above and other objects and advantages of the invention, as will appear from the following description, are obtained with an adjustable fastening system as described in claim 1. Preferred embodiments and non-trivial variations of the invention are the subject matter of the dependent claims.

The present invention will be better described by some preferred embodiments thereof, provided as a non-limiting example, with reference to the enclosed drawings, in which:

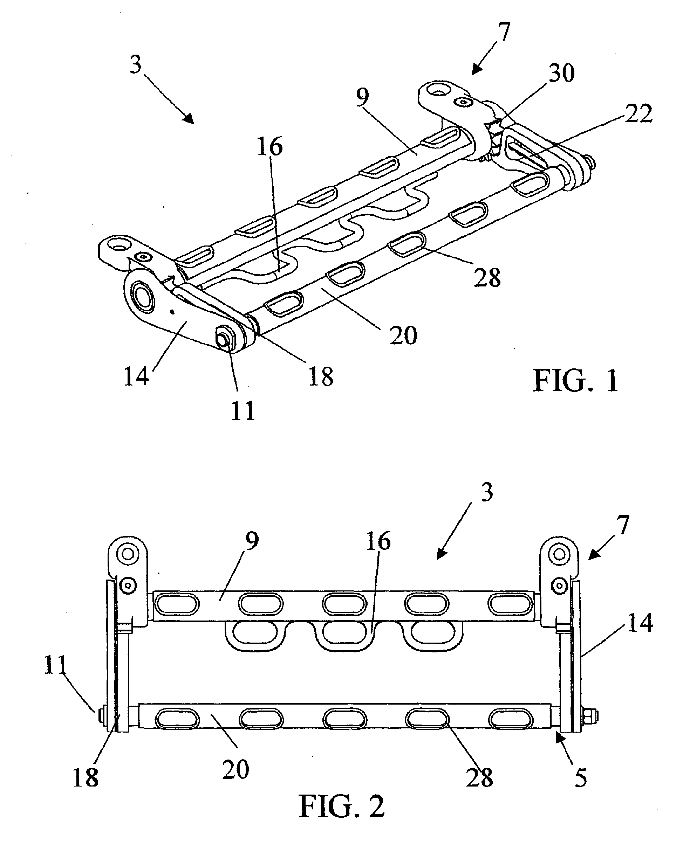

- Figure 1 is a perspective view of an embodiment of the fastening system of the present invention;
- Figure 2 is a top view of the system of Fig. 1;
- Figure 3 is an exploded perspective view of the system of Fig. 1 that shows well the component parts and how they are operativally joined one to another;
- Figure 5 is a side view of the fastening system of Fig. 1 in an operating configuration allowed by its adjusting means;
- Figure 6 is a side view of the fastening system of Fig. 1 in another opeating configuration allowed by its adjusting means;
- Figure 7 is a side view of the fastening system of Fig. 1 in another operating and unlocked configuration of its adjusting means;
- Figure 8 shows the use of the invention for fastening a movable board for loading/unloading vehicles;
- Figure 9 shows the use of the invention in position for locking the loaded vehicle wheel; and
- Figure 10 shows the use of the invention for passing the vehicle to be loaded/unloaded from one loading plane to another.

With reference to the Figures, a preferred, but not limiting, embodiment of the adjustable fastening system for loading boards 1 for vehicles 2, in particular for loading vehicles 2 onto other vehicles (for example trucks, not shown) for transporting the vehicles themselves, is described.

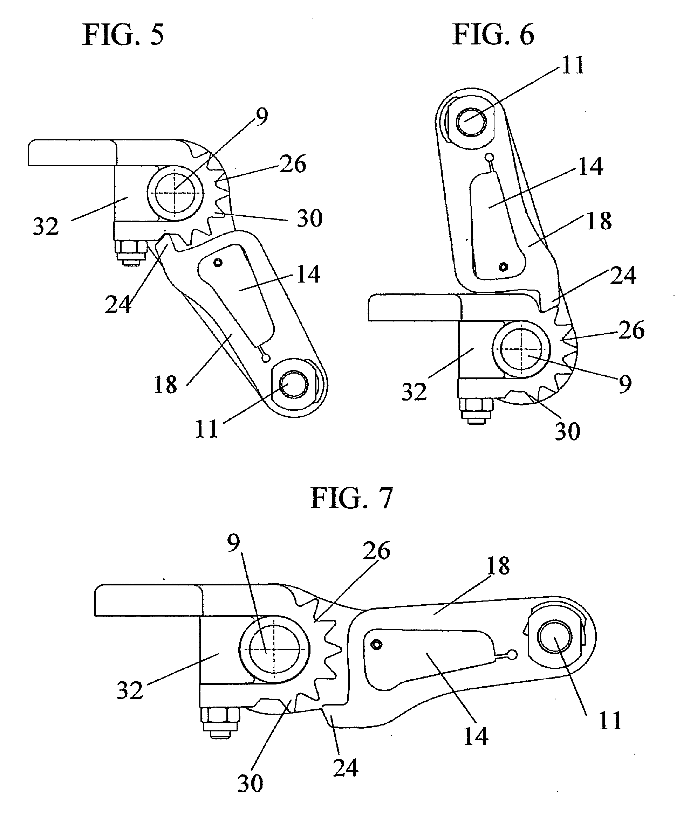

Such fastening system substantially comprises a rotary supporting framework 3, that can be adjusted in different operating positions between the two extreme positions shown in Fig. 5 and Fig. 6; in order to pass between these two operating positions, the supporting framework 3 assumes a configuration as shown in Fig. 7 and that will be described more in detail below.

The inventive fastening system further comprises means 5 for locking/unlocking the rotation of the supporting framework 3; and means 7 for securing the supporting framework 3 and the locking/unlocking means 5.

In particular, the supporting framework 3 is composed of a pivot bar 9 and at least two arms 14 which are integral with the pivot bar 9 at an end thereof and support the locking/unlocking means 5 due to the external bearing bar 11 at another end thereof.

Moreover, the supporting framework 3 can be equipped with at least one (and preferably three, as shown) fastening member 16, around which the fastening tie-rods for the wheels 4 of the loaded vehicles 2 must pass, in order to guarantee a further unmovable hold of the vehicles 2 themselves during their transport. The fastening member 16 is operatively connected to the pivot bar 9, thereby increasing its operating functionality.

As shown, such fastening members 16 can be composed of slits or ring-shaped members, or other members with similar tie-rod holding functionality.

Still in particular, as shown, the locking/unlocking means 5 are composed of at least two actuating members 18 (preferably made as handles adapted to be grasped and actuated by a user's hand) mutually integrally joined through a joining bar 20.

Moreover, the actuating members 18 are preferably equipped with elastic means 22 (commonly a plate spring or a normal suitable power spring) adapted to take back the actuating members 18 to their engagement position with the securing means 7 when no opening force is applied to the actuating members 18: this obviously greatly facilitates the operating flexibility and the handliness of the fastening system of the invention.

Moreover, the actuating members 18 are equipped with at least one fastening tooth 24 adapted to engage a corresponding recess 26 with which the securing means 7 are equipped: this allows an unmovable (downward) hold of the fastening system in one of the operating positions in which it can go, as can be seen in Fig. 5 and 6.

In order to realise the final operating configuration of the fastening system, the external bearing bar 11 joins the supporting framework 3 and the locking/unlocking means 5 through the arms 14 and the joining bar 20.

Moreover, the joining bar 20 is equipped with a plurality of projecting members 28 adapted to prevent the wheels 4 of the vehicles 2 to be loaded from sliding: also this operating improvement allows a more efficient loading of vehicles 2.

In order to aid the final realisation of the inventive fastening system, making it suitable to be actuated through a single hand of a user, leaving the other hand free for different tasks, the locking/unlocking means 5 are placed inside the supporting framework 3.

Moreover, in particular, the securing means 7 can be composed of a plurality of teeth 30 and recesses 26 for engaging the fastening teeth 24 of the actuating members 18 of the locking/unlocking means 5.

The supporting framework 3 with the locking/unlocking means 5 can rotate inside a seat obtained in the securing means 7 and in the hinging means 32.

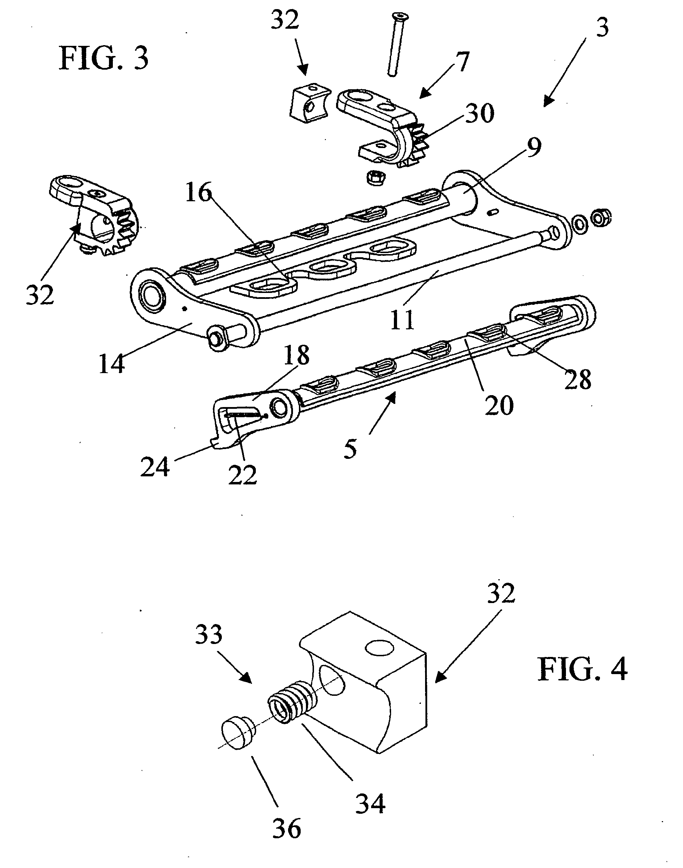

As further operating characteristic, the fastening system of the invention can further be equipped with means 33 for dampening vibrations when travelling. In particular, with reference to Figure 4, such dampening means 33 are composed of a spring 34 and an abutment member 36 placed in the hinging means 32 and adapted to engage the supporting framework 3. With this configuration, the dampening means 33, through the abutment member 36, are adapted to get in contact with the pivot bar 9 of the supporting framework 3 in order to dampen the fastening system vibrations.

The operation of the present invention will now be described with reference in particular to Figures 5 to 7 and 8 to 10.

When it is necessary to unlock the fastening system in order to take it to its operating position that allows loading and/or unloading the vehicles 2, the actuating members 18 are actuated (actually it is enough to actuate only one of such members 18, since they move in unison being operatively and integrally coupled by means of the bar 20) through a pressure of the user hand (or through automatic means adapted for such purpose, not shown), in order to reach the unfastening position of Fig. 7, in which the tooth 24 of the locking/unlocking means 5 is disengaged from the corresponding recess 26 of the securing means 7.

It is thereby possible to lower the fastening system till it reaches its operating loading/unloading position (Fig. 5, 8 and 10); at that time, as can be seen in Fig. 5, the tooth 24 is taken back to engage the recess 26 so that the fastening system is fixed and unmovable in its operating position.

When instead the fastening system has to be taken back to its closing position in which the wheels 4 of vehicles 2 are stopped or in any intermediate higher position, it is enough to push the same system in the opposite direction to that in which it had been opened: in this case, it is not necessary to actuate the locking/unlocking means 5, since, due to the provided configuration, such closing operation can be performed by simply pushing the fastening system upwards (for example through the user hands). Finally, the position shown in Fig. 6 or 9 will be reached.

It will be immediately obvious that the above-described inventive fastening system can be easily automated, namely the actuating members 18, for example, could themselves be actuated by suitable mechanisms (not shown) of a mechanical, pneumatic, electric, etc. type, still for example through remote actuation by a user. Also this automated configuration therefore falls within the scope of the present invention, as pointed out by the enclosed claims.

## Claims

1. Adjustable fastening system for boards (1) for loading vehicles (2), comprising:
- a rotary supporting framework (3), said supporting framework (3) being adapted to assume two extreme positions and a plurality of intermediate positions in which it is able to operate as fastening, stopper and passing device for wheels (4) of loaded vehicles (2);
- means (5) for locking/unlocking a rotation of said supporting framework (3); and
- means (7) for securing said locking/unlocking means (5),
**characterised in that**
- said supporting framework (3) is composed of a pivot bar (9) and at least two arms (14), said arms (14) being adapted to mutually connect respective ends of said pivot bar (9), and thereby to support the locking/unlocking means (5), with an external bearing bar (11), said arms (14) being adapted to rotate, and therefore to rotate with them said pivot bar (9),
- said locking/unlocking means (5) is composed of at least two actuating members (18) mutually integrally joined through a joining bar (20), whereby said external bearing bar (11) is adapted to join the supporting framework (3) and the locking/unlocking means (5) and to be placed inside the joining bar (20).

2. Fastening system according to claim 1, **characterised in that** said supporting framework (3) is further equipped with at least one fastening member (16) for securing tie-rods for wheels (4) of loaded vehicles (2), said at least one fastening member (16) being operatively connected to said pivot bar (9).

3. Fastening system according to claim 2, **characterised in that** said fastening members (16) are three.

4. Fastening system according to claim 2 or 3, **characterised in that** said fastening members (16) are composed of slits or ring-shaped members.

5. Fastening system according to claim 1, **characterised in that** said actuating members (18) are equipped with elastic means (22) adapted to take back said actuating members (18) to their engagement position with said securing means (7) when no opening force is applied to said actuating members (18).

6. Fastening system according to claim 5, **characterised in that** said elastic means (22) are composed of a plate spring.

7. Fastening system according to claim 1, **characterised in that** said actuating members (18) are equipped with at least one fastening tooth (24) adapted to engage a corresponding recess (26) with which said securing means (7) are equipped.

8. Fastening system according to claim 1, **characterised in that** said joining bar (20) is equipped with a plurality of projecting members (28) adapted to prevent the wheels (4) of vehicles (2) to be loaded from sliding.

9. Fastening system according to claim 1, **characterised in that** said locking/unlocking means (5) are placed inside said supporting framework (3).

10. Fastening system according to claim 1, **characterised in that** said securing means (7) are composed of a plurality of teeth (30) in which recesses (26) are obtained for engaging fastening teeth (24) of the actuating members (18) of the locking/unlocking means (5).

11. Fastening system according to claim 1, **characterised in that** it is further equipped with means (33) for dampening vibrations when travelling.

12. Fastening system according to claim 11, **characterised in that** said dampening means (33) are composed of a spring (34) and an abutment member (36) placed in hinging means (32) and adapted to engage said supporting framework (3).

13. Fastening system according to claim 11 or 12, **characterised in that** said dampening means (33) are adapted to get in contact with said pivot bar (9) of said supporting framework (3) to dampen the fastening system vibrations.

## Patentansprüche

1. Verstellbares Befestigungssystem für Ladeflächen (1) für Fahrzeuge (2), das folgendes einschließt:
- Ein drehbares Traggestell (3), das genannte Traggestell (3) dient dazu, zwei extreme Positionen und mehrere Zwischenpositionen einzunehmen, in denen es als Befestigungsvorrichtung, Feststellvorrichtung und Durchgang für die Räder (4) der geladenen Fahrzeuge (2) funktionieren kann;
- Sperr-/Freigabevorrichtungen (5) der Drehung des genannten Traggestells (3); und
- Befestigungsvorrichtungen (7) der genannten Sperr-/Freigabevorrichtungen (5),
und ist **dadurch gekennzeichnet, dass**:
- das genannte Traggestell (3) aus einer Bolzenstange (9) und mindestens zwei Armen (14) besteht, die genannten Arme (14) dienen dazu, die entsprechenden Endstücke der Bolzenstange (9) miteinander zu verbinden und auf diese Weise die Sperr-/Freigabevorrichtungen (5) mit einer externen Feststellstange (11) zu tragen, die genannten Arme (14) dienen dazu, sich zu drehen und **dadurch** auch, die genannte Bolzenstange (9) mit ihnen zu drehen,
- Die genannten Sperr-/Freigabevorrichtungen (5) bestehen aus mindestens zwei Antriebselementen (18), die miteinander vollständig durch eine Verbindungsstange (20) verbunden sind, daher dient die externe Feststellstange (11) dazu, die Verbindung zwischen dem Traggestell (3) und den Sperr-/Freigabevorrichtungen (5) zu realisieren, und ist in der Verbindungsstange (20) untergebracht.

2. Befestigungssystem gemäß Patentanspruch 1, das **dadurch gekennzeichnet ist, dass** das Traggestell (3) mit mindestens einem Befestigungselement (16) für Zugstangen zur Befestigung der Räder (4) der geladenen Fahrzeuge (2) ausgestattet ist, das genannte mindestens eine Befestigungselement (16) wird operativ mit der genannten Bolzenstange (9) verbunden.

3. Befestigungssystem gemäß Patentanspruch 2, das **dadurch gekennzeichnet ist, dass** die genannten Befestigungselemente (16) drei sind.

4. Befestigungssystem gemäß Patentanspruch 2 oder 3, das **dadurch gekennzeichnet ist, dass** die genannten Befestigungselemente (16) aus Ösen oder Ringelementen bestehen.

5. Befestigungssystem gemäß Patentanspruch 1, das **dadurch gekennzeichnet ist, dass** die genannten Antriebselemente (18) mit elastischen Vorrichtungen (22) ausgestattet sind, die dazu dienen, die genannten Antriebselemente (18) in die Spannungsposition mit den genannten Befestigungsvorrichtungen (7) zu bringen, wenn keine Öffnungskraft auf die genannten Antriebselemente (18) angewendet wird.

6. Befestigungssystem gemäß Patentanspruch 5, das **dadurch gekennzeichnet ist, dass** die genannten elastischen Vorrichtungen (22) aus einer Flachfeder bestehen.

7. Befestigungssystem gemäß Patentanspruch 1, das **dadurch gekennzeichnet ist, dass** die genannten Antriebselemente (18) mit mindestens einem Befestigungszahn (24) ausgestattet sind, der dazu dient, einen entsprechenden Hohlraum (26) zu spannen, mit dem die genannten Befestigungsvorrichtungen (7) ausgestattet sind.

8. Befestigungssystem gemäß Patentanspruch 1, das **dadurch gekennzeichnet ist, dass** die genannte Verbindungsstange (20) mit mehreren vorstehenden Elementen (28) ausgestattet ist, die dazu dienen, das Rutschen der Räder (4) der geladenen Fahrzeuge (2) zu verhindern.

9. Befestigungssystem gemäß Patentanspruch 1, das **dadurch gekennzeichnet ist, dass** die genannten Sperr-/Freigabevorrichtungen (5) intern im genannten Traggestell (3) angebracht sind.

10. Befestigungssystem gemäß Patentanspruch 1, das **dadurch gekennzeichnet ist, dass** die genannten Befestigungsvorrichtungen (7) aus mehreren Zähnen (30) bestehen, in denen Spannungshohlräume (26) mit den Befestigungszähnen (24) der Antriebselemente (18) der Sperr-/Freigabevorrichtungen (5) angebracht sind.

11. Befestigungssystem gemäß Patentanspruch 1, das **dadurch gekennzeichnet ist, dass** es außerdem mit Dämpfungsvorrichtungen (33) gegen die Vibrationen während der Fahrt ausgestattet ist.

12. Befestigungssystem gemäß Patentanspruch 11, das **dadurch gekennzeichnet ist, dass** die genannten Dämpfungsvorrichtungen (33) aus einer Feder (34) und einem Anschlagelement (36) bestehen, die in den genannten Scharniervorrichtungen (32) angebracht sind und dazu dienen, das genannte Traggestell (3) zu spannen.

13. Befestigungssystem gemäß Patentanspruch 11 oder 12, das **dadurch gekennzeichnet ist, dass** die genannten Dämpfungsvorrichtungen (33) dazu dienen, mit der genannten Bolzenstange (9) des genannten Traggestells (3) in Kontakt zu kommen, um die Vibrationen des Befestigungssystems zu dämpfen.

## Revendications

1. Système d'encliquetage réglable pour plates-formes (1) de chargement sur véhicules (2), comprenant:
- une armature de support (3) pivotante, ladite armature de support (3) étant capable de prendre deux positions extrêmes ainsi que plusieurs positions intermédiaires où elle est en mesure d'agir comme dispositif d'encliquetage, de butée et de passage pour les roues (4) des véhicules (2) chargés;
- des moyens (5) de verrouillage/déverrouillage du pivotement de ladite armature de support (3); et
- de moyens (7) de fixation desdits moyens de verrouillage/déverrouillage (5),
**caractérisé en ce que**
- ladite armature de support (3) est constituée d'une barre de pivot (9) et d'au moins deux bras (14), lesdits bras (14) étant capable de relier entre elles les respectives extrémités de ladite barre de pivot (9), et à soutenir ainsi les moyens de verrouillage/déverrouillage (5), avec une barre de tenue extérieure (11), lesdits bras (14) étant capables de pivoter et par conséquent de faire pivoter avec eux ladite barre de pivot (9),
- lesdits moyens de verrouillage/déverrouillage (5) sont constitués d'au moins deux éléments d'actionnement (18) unis entre eux en mode intégral par l'intermédiaire d'une barre d'union (20), par conséquent ladite barre de tenue extérieure (11) étant capable de réaliser l'union entre l'armature de support (3) et les moyens de verrouillage/déverrouillage (5) et pouvant être placée à l'intérieur de la barre d'union (20).

2. Système d'encliquetage selon la revendication 1, **caractérisé en ce que** ladite armature de support (3) est encore munie d'au moins un élément d'encliquetage (16) pour les tringles de fixation des roues (4) des véhicules (2) chargés, ledit au moins un élément d'encliquetage (16) étant opérationnellement relié à ladite barre de pivot (9).

3. Système d'encliquetage selon la revendication 2, **caractérisé en ce que** lesdits éléments d'encliquetage (16) sont au nombre de trois.

4. Système d'encliquetage selon la revendication 2 ou 3, **caractérisé en ce que** lesdits éléments d'encliquetage (16) sont constitués de boutonnières ou d'éléments annulaires.

5. Système d'encliquetage selon la revendication 1, **caractérisé en ce que** lesdits éléments d'actionnement (18) possèdent des moyens élastiques (22) capables de reporter lesdits éléments d'actionnement (18) en position d'engagement avec lesdits moyens de fixation (7) lorsque aucune force d'ouverture n'est appliquée sur lesdits éléments d'actionnement (18).

6. Système d'encliquetage selon la revendication 5, **caractérisé en ce que** lesdits moyens élastiques (22) sont constitués d'un ressort plat.

7. Système d'encliquetage selon la revendication 1, **caractérisé en ce que** lesdits éléments d'actionnement (18) sont pourvus d'au moins une dent d'encliquetage (24) capable d'engager une cavité correspondante (26) présente sur lesdits moyens de fixation (7).

8. Système d'encliquetage selon la revendication 1, **caractérisé en ce que** ladite barre d'union (20) est munie d'une pluralité d'éléments saillants (28) pour empêcher que les roues (4) des véhicules (2) à charger ne glissent.

9. Système d'encliquetage selon la revendication 1, **caractérisé en ce que** lesdits moyens de verrouillage/déverrouillage (5) sont placés à l'intérieur de ladite armature de support (3).

10. Système d'encliquetage selon la revendication 1, **caractérisé en ce que** lesdits moyens de fixation (7) sont constitués d'une pluralité de dents (30) dans lesquelles sont aménagées des cavités (26) d'engagement avec les dents d'encliquetage (24) des éléments d'actionnement (18) des moyens de verrouillage/déverrouillage (5).

11. Système d'encliquetage selon la revendication 1, **caractérisé en ce qu'**il possède encore des moyens (33) d'amortissement des vibrations pendant la marche.

12. Système d'encliquetage selon la revendication 11, **caractérisé en ce que** lesdits moyens d'amortissement (33) sont constitués d'un ressort (34) et d'un élément de butée (36) installés dans lesdits moyens d'articulation (32) et sont capables d'engager ladite armature de support (3).

13. Système d'encliquetage selon la revendication 11 ou 12, **caractérisé en ce que** lesdits moyens d'amortissement (33) sont capables d'entrer en contact avec ladite barre de pivot (9) de ladite armature de support (3) pour amortir les vibrations du système d'encliquetage.
